# EUROPEAN PATENT SPECIFICATION

(11) **EP 4 232 346 B1**
(45) Date of publication and mention of the grant of the patent: **10.07.2024**
(21) Application number: 21806027.5
(22) Date of filing: 19.10.2021
(51) Int. Cl.: B62D 57/032

(54) **ROBOT WITH AN ADAPTIVE ROBOTIC FOOT**
ROBOTER MIT EINEM ADAPTIVEN FUSS
ROBOT MUNI D'UN PIED ADAPTIF

(30) Priority: 20.10.2020 IT 202000024727
(43) Date of publication of application: 30.08.2023
(73) Proprietor: Università di Pisa, 56124 Pisa (IT); Fondazione Istituto Italiano di Tecnologia, 16163 Genova (IT); QBRobotics S.r.l., 56023 Cascina (Pisa) (IT); Eidgenössische Technische Hochschule Zürich, 8092 Zürich (CH)
(72) Inventor: BICCHI, Antonio, 54100 Massa (IT); GARABINI, Manolo, 19020 Bolano (IT); POLLAYIL, Mathew Jose, 59100 PRATO (IT); PETROCELLI, Cristiano, Pisa (IT); GRIOLI, Giorgio, Pisa (IT); CATALANO, Manuel Giuseppe, Pisa (IT); VALSECCHI, Giorgio, Zurich (CH); BONOMO, Fabio, Pisa (IT); PERSICHINI, Riccardo, Montalto di Castro (IT); HUTTER, Marco, Flawil (CH)
(74) Representative: Lunati & Mazzoni S.r.L.
(86) International application number: PCT/IB2021/059616
(87) International publication number: WO 2022/084849

(56) References cited:
- CN-A- 108 927 796
- JP-A- 2020 015 119
- CATALANO MANUEL G ET AL: "HRP-4 Walks on Soft Feet", IEEE ROBOTICS AND AUTOMATION LETTERS, IEEE, vol. 6, no. 2, 9 March 2020 (2020-03-09), pages 470 - 477, XP011830698, DOI: 10.1109/LRA.2020.2979630

## Description

The present invention relates to a robot with an adaptive robotic foot of the type specified in the preamble of the first claim.

The object of the present invention is to be identified in a foot that functionally adapts to the actions of a robot in order to give balance and stability to the robot. Currently, most robotic feet, such as flat ones with activated ankles, favor simplicity and robustness at the expense of a reduction in functionality. This is for example the case in document JP 2020 015119 A.

In recent years, adaptive robotic feet have been developed, or rather able to change the shape of the foot to adapt to the ground, capable of giving greater stability and better perception of the ground.

A first example of an adaptive robotic foot involves the use of inflatable balls or other delicate soft components. For example, CN202624435 introduces the possibility of making a flexible foot consisting of a flat part with rubber pads to absorb impacts; US2018311837 shows a mechanical embodiment of the sole of the foot divided into two parts; other examples involve the use of an airtight bag filled with granular material to be placed between the foot and the ground. The article "HRP-4 Walks on Soft Feet" of M. Catalano et al. also discloses such an adaptive robotic foot.

The known technique described includes some important drawbacks.

In detail, the known adaptive feet are difficult to use in difficult external environments and/or on soft and deformable ground such as sand or snow. Therefore, the adaptive feet are not currently able to work on all terrains guaranteeing adequate stability.

Other drawbacks of the known adaptive robotic feet are, for example, to be identified in the mechanical complexity which determines high costs, high weights and design difficulties; in the complicated modeling that complicates their study; in the complexities of control.

In this situation, the technical task underlying the present invention is to devise a robot with an adaptive robotic foot capable of substantially obviating at least part of the aforementioned drawbacks.

Within the scope of said technical task, an important object of the invention is to obtain an adaptive robotic foot that can be used in any condition.

Another important object of the invention is to provide an adaptive robotic foot which has relatively simple mechanics and therefore reduced costs, low weight and limited design and control difficulties.

The technical task and the specified aims are achieved by a robot with an adaptive robotic foot as claimed in the annexed claim 1. Examples of preferred embodiment are described in the dependent claims.

The characteristics and advantages of the invention are clarified below by the detailed description of preferred embodiments of the invention, with reference to the accompanying drawings, in which:
the **Fig. 1** shows, in scale, a possible application of the robotic foot according to the invention;
the **Fig. 2** illustrates, in scale, a second view of Fig. 1;
the **Fig. 3** shows, in scale, an exploded view of the robot foot according to the invention;

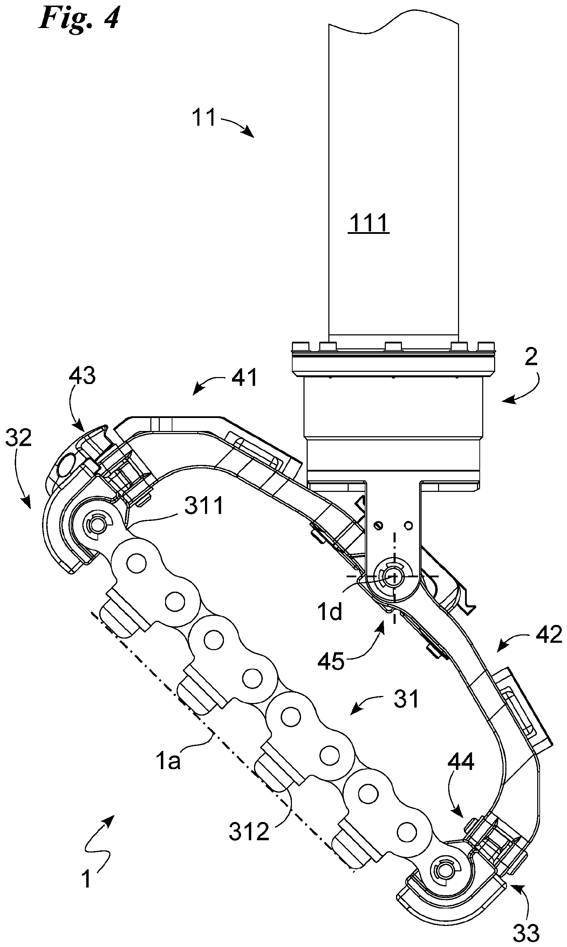

the **Fig. 4** shows, in scale, the robotic foot in a different position;

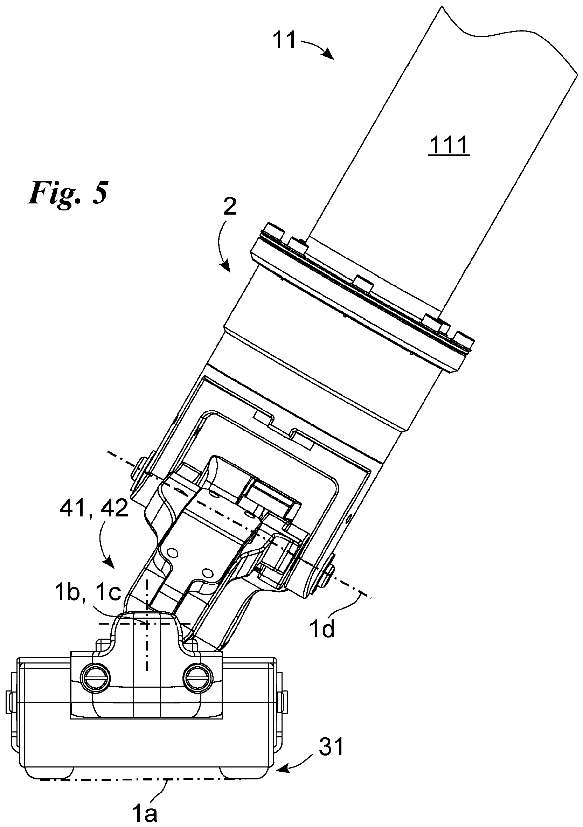

the **Fig. 5** illustrates, in scale, the robotic foot in a further position;

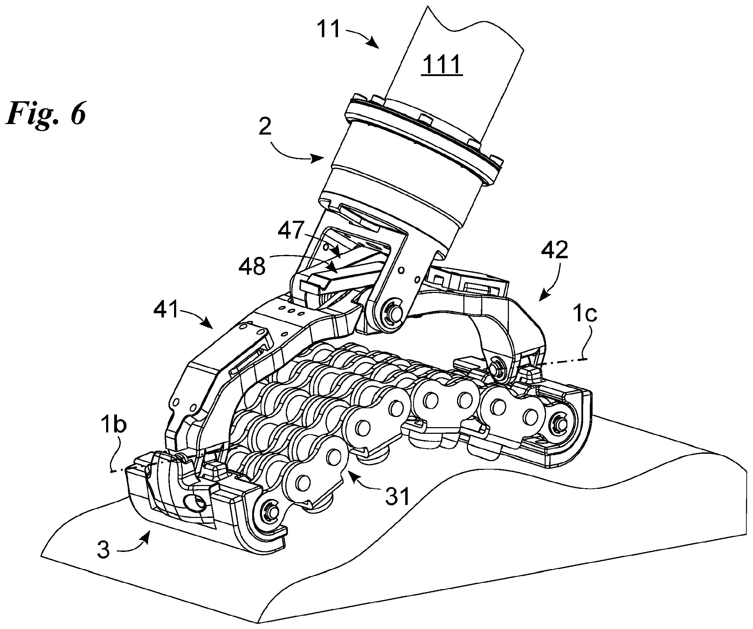

the **Fig. 6** shows, in scale, the robotic foot in a third position; and
the **Fig. 7** shows, in scale, a possible robot comprising more robotic foot according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

The measurements and data reported in this text are to be considered, unless otherwise indicated, as performed in the International Standard Atmosphere ICAO (ISO 2533:1975).

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

With reference to the Figures, the robotic foot according to the invention is globally indicated with the number **1.**

It is adapted to be constrained to a robot **10**.

The robotic foot 1 defines a contact area **1a** of the foot 1 and therefore of said robot external to a resting surface. The resting surface can be defined by a ground, a rock, a road or other structure on which the foot 1 can rest.

As described in detail below, the contact area 1a can have a flat profile (or rather. be flat) or a deformed profile i.e. be bent and/or curved due, for example, to its contact with an irregular resting surface.

The robotic foot 1 defines a front face and a rear face. The contact area 1a extends from said front face to said rear face. In detail, it mainly extends from the front to the rear face.

The robotic foot 1 is part of a robot 10.

The robot 10 can comprise at least one module and in detail a plurality of mutually movable modules so as to allow said robot 10 to perform at least one operation and/or to move on a resting surface.

In particular, the robot 10 comprises at least one module identifying a limb 11 configured to rest and therefore unload the weight of the robot 10 on a support surface and/or to allow said robot to move along said resting surface.

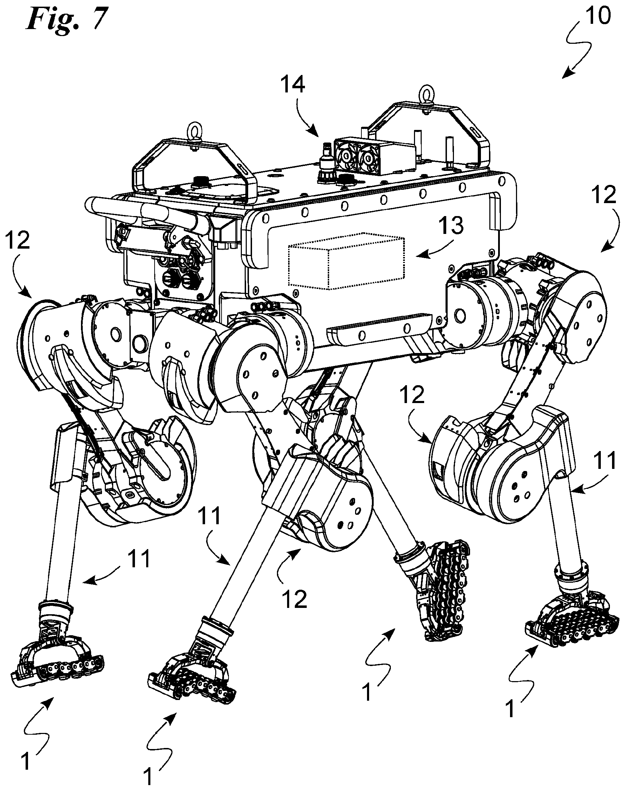

Preferably, the robot 10 can comprise several modules identifying limbs 11. For example, Fig. 7 shows a robot 10 comprising four modules each identifying a limb 11 and a fifth module identifying the central body of the robot 10 to which said limbs 11 are constrained.

At least one limb 11 comprises at least one robotic foot 1.

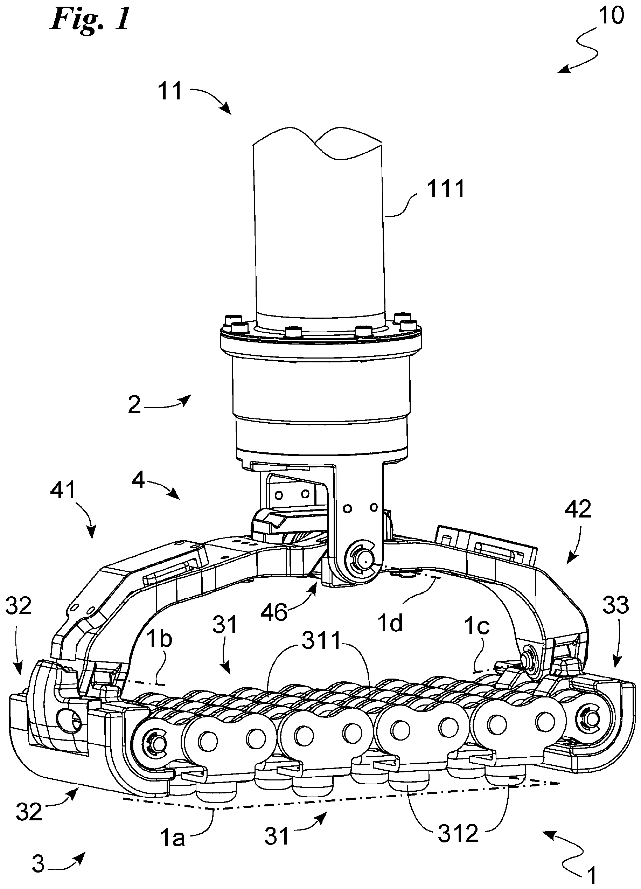

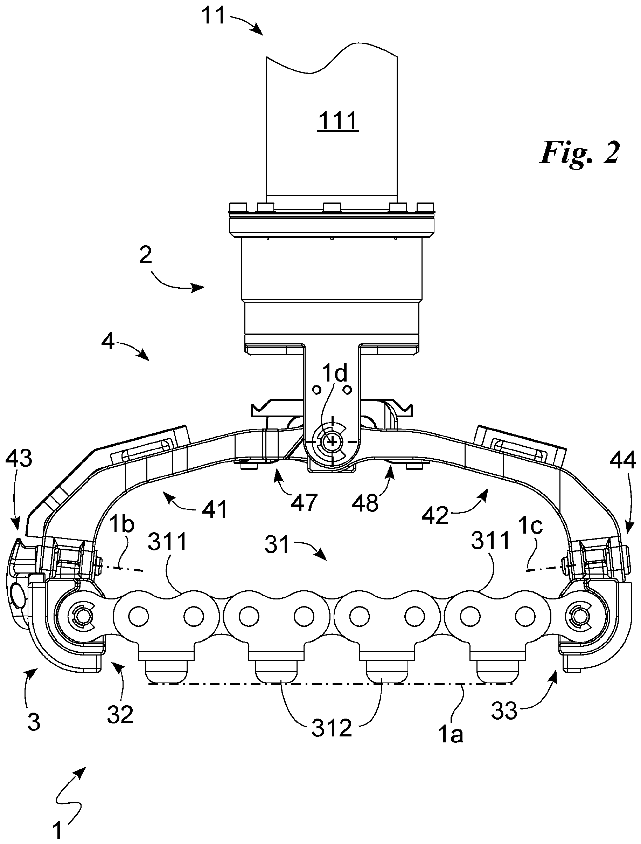

This limb 11, illustrated in Figs. 1 and 2, comprises an anchoring body **111** for anchoring the robotic foot 1 to the rest of the lower limb 11 and therefore of the robot 10. It is highlighted how the robot 10 can comprise, in addition to modules identifying a limb 11, modules configured to perform other functions such as identifying additional limbs such as gripping and/or handling of an object. For example, in an anthropomorphic robot the robot 10 can comprise two modules each identifying a limb 11; two modules each identifying an additional limb (in detail an upper limb); a module identifying the torso and a module identifying the head of said robot 10. The robot 10 comprises at least one motor **12** for moving said limb 11.

The motor 12 is configured to move the limb 11 with respect to the rest of the robot 10 so as to allow said robot 10 to move on said support surface.

The motor 12 can be electric.

The robot 10 comprises a control unit **13** for said motor 12.

The robot 10 can comprise a power supply system **14** of the robot such as a battery and/or a connection to an external network.

The robotic foot 1 comprises an attachment 2, preferably integral, of the foot 1 to the anchoring body 111.

The robotic foot 1 comprises a contact organ **3** defining the contact area 1a.

The contact organ 3 is configured to vary the profile of the contact area 1a which can therefore be flat or deformed.

The contact organ 3 can comprise at least one chain **31** defining the contact area 1a. In detail, it comprises a plurality of chains 31 suitably parallel to each other. More in detail, the organ 3 comprises at least three chains 31 and for example four.

Each chain 31 defines a first end and a second end.

Preferably each chain 31 is an articulated chain. It can comprise at least one link **311** and in detail a plurality of links 311 mutually constrained so as to suitably rotate idly.

The axis of rotation between the links is substantially parallel to the contact area 1a regardless of the profile of the contact area 1a.

The links 311 belonging to distinct chains 31 may not be constrained to each other so as to allow independent deformation of the chains 31.

Each chain 31 can comprise for each link 311 a cleat **312** defining at least one sector of the contact area 1a.

The cleat 312 can be made of elastomeric material or other material configured to absorb the forces/impacts upon contact between the contact area 1a and the restting surface.

The contact area can be defined by the area enclosing (circumscribed) to the portion of said at least one chain of contact with the resting surface, in detail to the links 311 in contact with the bearing surface and in more detail by the cleats 312 and in detail the surfaces of the studs 312 in contact with the bearing surface.

The contact organ 3 can comprise a first support **32** constrained to each chain 31 at the first end and a second support **33** constrained to each chain 31 at the second end.

The first support 32 can be placed in correspondence with the front face.

The second support 33 can be placed in correspondence with the rear face.

The supports 32 and 33 enclose the at least one chain 31 between them.

The supports 32 and 33 identify the only constraints between links 311 of different chains 31.

The first support 32 is hinged to each chain 31 at the link 311 defining the first end allowing said links 311 to rotate with respect to the first support 32 suitably idly. The axis of rotation between the first support 32 and at least one chain 31 is substantially parallel to the contact area 1a.

The second support 33 is hinged to each chain 31 at the link 311 defining the second end allowing said link 311 to rotate with respect to the second support 33 suitably idly.

The axis of rotation between the second support 33 and at least one chain 31 is substantially parallel to the contact area 1a.

The robotic foot 1 comprises a joint block **4** of the contact organ 3 to the attachment 2.

The joint block 4 is constrained in a compliant way and hinged in detail to the contact organ 3.

It is constrained in a compliant way and hinged in detail to the attachment 2.

The joint block 4 can comprise a first arm **41** subtended between the first end of the chain 3 and attachment 2 and in detail between the first support 32 and attachment 2; and a second arm **42** subtended between the second end of the chain 3 and the attachment 2 and in detail between the second support 33 and the attachment 2. The first arm 41 is constrained, suitably not directly, to the chain 3 at the first end. In detail, it is hinged to the chain 3 and to be more precise to the first support 32. The second arm 42 is suitably not directly connected to the chain 3 at the second end. In detail, it is hinged to the chain 3 and to be more precise to the second support 33.

The joint block 4 comprises a first hinge **43** defining a first axis of rotation **1b.**

The first hinge 43 can be placed in correspondence with the front face and preferably external to the projection of the contact area 1a, said projection being almost perpendicular to the contact area 1a having a flat profile.

The first hinge 43 is configured to allow a first rotation, suitably idle, between the contact member 3 and the joint block 4. In particular, between the first arm 41 and the contact member 3. Preferably the first rotation is between the first arm 41 and the first support 32 and therefore between the first arm 41 and at least the chain 31. The first axis of rotation 1b can be practically transverse to the support area 1a and preferably incident to the support area 1a suitably at least in a flat profile.

The first axis 1b can define with respect to the support area 1a a first angle of inclination with an amplitude almost lower than 30° in detail substantially comprised between 30° and 1°, preferably between 10° and 3°. The width of the first angle can be almost equal to 6°.

The joint block 4 comprises a second hinge **44** defining a second axis of rotation **1c.**

The second hinge 44 is configured to allow a second rotation, suitably idle, between the contact member 3 and the joint block 4, in particular, between the second arm 42 and the contact member 3. Preferably the second rotation is between the second arm 41 and the second support 33 and therefore between second arm 41 and at least chain 31. The second hinge 44 can be placed in correspondence with the rear face and preferably external to the projection of the contact area 1a, said projection being almost perpendicular to the contact area 1a having flat profile.

The second hinge 44 is on the opposite side to the first hinge 43 with respect to the contact member 3 and, to be more precise, to the contact area 1a.

The second axis of rotation 1c can have an inclination opposite to the first axis 1b. Preferably, the first axis 1b and the second axis 1c are substantially coplanar and to be precise, incident with each other.

The second axis 1c can be substantially transverse to the area 1a and in detail incident to the resting area 1a suitably at least in a flat profile.

It can define with respect to the resting area 1a a second angle of inclination substantially less than 30 ° in detail substantially comprised between 30° and 1°, preferably between 10° and 3°. The width of the second angle can be almost equal to 6°.

It should be noted that the hinges 43 and 44 and therefore the rotations of the contact member 3 around the first axis 1b and the second axis 1c are mutually independent. Therefore, the first hinge 43 and the second hinge 44 are configured to allow distinct rotations around the first axis of rotation 1b and the second axis of rotation 1c causing a variation in the profile of the contact area 1a.

The joint block 4 is comprises an supplementary hinge **45** defining a supplementary axis of rotation **1d.**

The supplementary hinge 45 is configured to allow an additional rotation, suitably idle, between the attachment 2 and the joint block 4 and in particular between the attachment 2 and each arm 41 and 42. The supplementary hinge 45 is configured to allow rotation between the arms 41 and 42 suitably insane.

The supplementary axis of rotation 1d can be practically parallel to the resting area 1a and substantially incident in detail the projection of the center of gravity of the contact area 1a having a flat profile.

The supplementary axis of rotation 1d can be substantially perpendicular to the first rotation axis 1b.

First axis 1b and supplementary axis 1d can be skewed. It should be noted that the first arm 41 can be configured to distance the first hinge 43 and the supplementary hinge 45 and then the first axis 1b and the supplementary axis 1d from each other. The minimum distance, calculated along the perpendicular to the contact area 1a when in flat profile, between said axes 1b and 1d is at least equal to 0.5 cm and in detail to 1 cm. It can be substantially comprised between 1 cm and 10 cm in detail between 2 cm and 5 cm and more precisely between 3 cm and 4 cm.

The supplementary axis of rotation 1d can be substantially perpendicular to the second rotation axis 1c.

Second axis 1c and additional axis 1d can be skewed.

The second arm 42 can be configured to distance the second hinge 44 and the supplementary hinge 45 and therefore the second axis 1c and the supplementary axis 1d from each other. The minimum distance, calculated along the perpendicular to the contact area 1a when in flat profile, between said axes 1c and 1d is at least equal to 0.5 cm and in detail to 1 cm. It can be substantially comprised between 1 cm and 10 cm in detail between 2 cm and 5 cm and more precisely between 3 cm and 4 cm.

When the resting area 1a is in a flat profile, the additional axis 1d can be equidistant from the ends of the chains 31 in detail from the supports 32 and 33.

The joint block 4 can comprise elastic means **46** adapted to mutually spread the arms 41 and 42 keeping the at least one chain 31 under tension and therefore opposing a deformation of said chain 31 when in contact with an irregular and/or non-flat resting surface.

The elastic means 46 can be associated with the supplementary hinge 45 so as to oppose a variation (in detail a decrease) in the spreading angle between the arms 41 and 42. They can comprise a torsional spring connecting the two arms 41 to each other and 42.

The angle of spread can be centered on the supplementary axis of rotation 1d.

The joint block 4 can comprise at least one limit switch for the rotation of at least one and in detail of both arms 41 and 42 with respect to the supplementary axis of rotation 1d. Preferably it can comprise a first limit switch **47** for the first arm 41 and a second limit switch **48** for the second arm 42.

Each limit switch 47 and 48 is configured to limit the mutual approach of the arms 41 and 42 and therefore defines a minimum value of the spreading angle between arms 41 and 42.

Said minimum value of the spreading angle can be at least equal to 0°. In detail at 10°. It is substantially comprised between 15° and 60° in detail between 30° and 50° and for example substantially equal to 40°.

The robotic foot 1 comprises at least one sensor for measuring at least one between a first rotation around the first rotation axis 1b and a second rotation around the first rotation axis 1c.

The at least one sensor is in data connection with the control unit 13.

Said sensor system can comprise at least a first sensor **5** for measuring the first rotation around the first axis of rotation 1b in data connection with the aforementioned control unit 13. The control unit 13 is therefore configured to control the robot 10 according to the size of the first rotation.

The first sensor 5 is configured to measure the rotation between the first arm 41 and the contact member 3.

The first sensor 5 can be an inertial sensor. It can be integrated in the first arm 41 and/or integrated in the contact member 3 and in detail in the first support 32.

The sensors can comprise two first sensors 5, one integrated in the first support 32 and one in the first arm 41 to estimate the relative angle between said components.

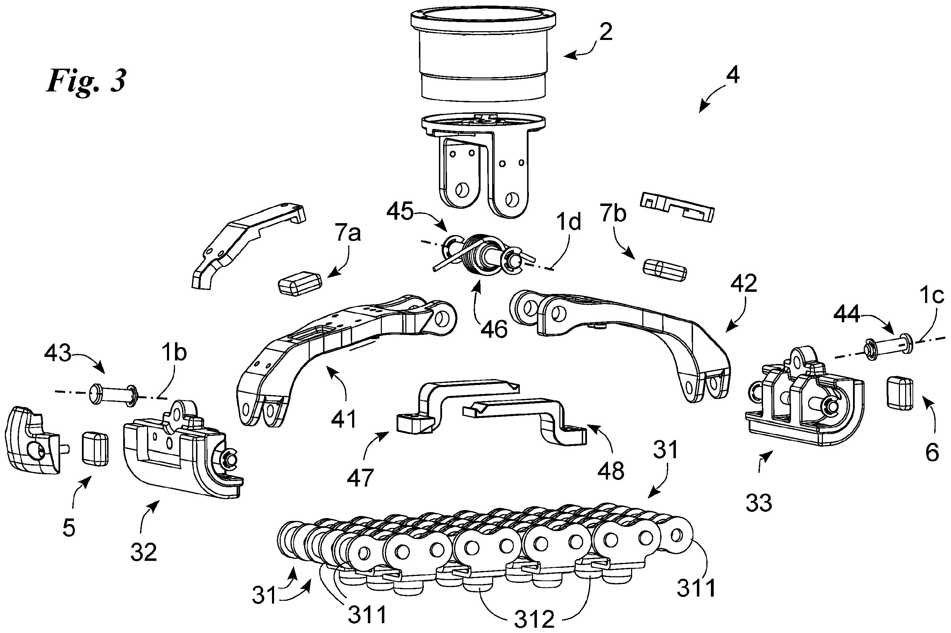

To be precise, a sensor placed as 5 in Fig. 3 will hardly be able to measure the relative angle between 41 and 3, even more so an inertial sensor cannot. At least two (inertial) sensors are needed, one on 41 and the other on 32 to estimate the relative angle.

The measure of the first rotation can be stored in the robot database.

The sensors can comprise at least a second sensor **6** for measuring the second rotation around the second axis of rotation 1c in data connection with the control unit 13. The control unit 13 is therefore configured to control the robot 10 according to the measurement of the second rotation.

The second sensor 6 is configured to measure the rotation between the second arm 42 and the contact member 3.

The measurement of the second rotation can be stored in the robot database.

The robot comprises at least one additional sensor for measuring the additional rotation around the supplementary axis of rotation 1d in data connection with said control unit 13.

The second sensor 6 can be an inertial sensor.

It can be integrated in the second arm 42 and/or integrated in the contact member 3 and in detail in the first support 33.

The sensors can comprise two second sensors 6, one integrated in the second support 33 and one in the second arm 42 to estimate the relative angle between said components.

The control unit 13 is therefore configured to control the robot 10 according to the extent of the additional rotation.

The additional sensor is configured to measure the rotation between the attachment 2 and at least one arm 41 and/or 42 and optionally between the arms 41 and 42. The additional sensor can be an inertial sensor.

Preferably the sensors can comprise a supplementary sensor for each arm in data connection with the control unit 13.

The measurement of each supplementary rotation can be stored in the robot database.

It can thus comprise a first supplementary sensor **7a** for measuring the additional first rotation between the first arm 41 and attachment 2 around the supplementary axis of rotation 1d; and a second supplementary sensor **7b** for measuring the supplementary second rotation between second arm 42 and attachment 2 around the supplementary axis of rotation 1d.

The first supplementary sensor 7a can be integrated into the first arm 41.

It can be an inertial sensor.

The second supplementary sensor 7b can be integrated into the second arm 42.

It can be an inertial sensor.

The control unit 13 is configured to control the robot 10 as a function of the extent of the supplementary rotation of the second arm 42 with respect to the attachment 2. It is therefore configured to control the robot 10 as a function of the extent of the additional rotation of the first arm 41 with respect to attachment 2.

The control unit 13 is configured to control the motor 12 of the robot 10 and therefore the movement of at least one limb 11 (or rather the movements of the robot 10 on the support surface) as a function of at least one measured measurement from the first sensor 5, from the at least one additional sensor (in detail both the supplementary sensors 7a and 7b) and preferably from the second sensor 6.

In detail it is configured to define the profile of the contact area 1a of each of the at least one foot 1 of a robot 10 according to the measurements obtained from the sensors of said foot 1 and therefore controlling the robot 10 according to the profile of said at least area 1a.

The control unit 13 is configured to control the movement of at least one limb 11 defining for the robot a condition of equilibrium on the resting surface.

For this purpose, it can comprise a robot database comprising the physical and/or mechanical characteristics of the robot 10 (in detail of each module) so as to allow the unit to determine which movement to perform to define an equilibrium condition. Finally, it should be noted that the robotic foot 1 can be passive and therefore devoid of motors. The contact area 1a is therefore configured to remain flat (thanks to the elastic means 46) and deform only when pressed against a suitably non-flat and therefore irregular support surface.

The operation of the robotic foot 1 and therefore of the robot 10 previously described in structural terms is as follows.

When the robot 10 moves along a support surface 1a, the control unit 13 commands, for example, the lifting of the foot 10 from the resting surface and its resting in a different point of the resting surface.

Upon lifting, the contact area 1a detaches from the support surface and therefore the weight of the robot 10 no longer presses the contact area 1a against the resting surface. Consequently, the chains 31 are subject only to the action of the elastic means 46 which, by spreading the arms 41 and 42, stretch the chains 31 which therefore define a contact area 1a with a flat profile.

The rotation of the arms 41 and 42, measured by at least the supplementary sensors 7a and 7b, is detected by the control unit 13 which can thus identify the flat profile of the area 1a.

It is highlighted how the lifting of the foot 1, removing a support from the robot 10, can bring the robot 10 to a non-equilibrium condition. This condition can be identified by the unit by means of special sensors of the robot and/or by detecting a rotation by the sensors of at least a second foot 1 of the robot 10 different from the one being moved and still in contact with the resting surface.

Once the non-equilibrium condition has been detected, the control unit 13 defines, for example thanks to the robot database, a new equilibrium condition and therefore the profile that the contact areas 1a must assume in order to obtain said configuration.

Then the unit commands a displacement of a limb, such as to vary the shape of the contact area 1a of at least one said second foot 1. For example, it can command the motor 12 to move the limb 11 corresponding to the second foot 1 so as to alter the profile of the area 1a (corresponding to a modification of the interaction and therefore of the forces exchanged between area 1a and the contact surface) until the profile suitable for the new equilibrium condition is obtained.

When the foot 1 rests on said new point of the support surface, the contact area 1a of this foot 1 can acquire a deformed profile due to the pressure given by the unloading of the weight of the robot 10 in said contact area 1a against the resting surface. This deformation of the area 1a involves a rotation of the joint block 4 with respect to the attachment 2 (for example an approach of the arms 41 and 42 in opposition to the elastic means 46) and / or a rotation of the contact member 3 with respect to the joint block 4.

The amplitude of these rotations, detected by the sensors 5, 7a and 7b and if present 6, can be exploited by the control unit 13 to acquire the profile of the contact area 1a and/or command a new movement of robot 10.

It can be seen how the support of foot 1 can define a condition of non-equilibrium and impose the assumption of a new condition of equilibrium.

The robotic foot 1 and therefore the robot 10 according to the invention achieve important advantages.

In fact, the robotic foot 1 is able to guarantee excellent stability on any type of support surface and therefore also in difficult external environments and / or on soft and deformable ground such as sand or snow. In fact, the adoption of one or more chains 31, suitably with links 311 of different separate chains 31, allows the contact area 1a to perfectly adapt its shape to each support surface and therefore to all terrains. In particular, this adjustment allows the foot 1 to maximize the contact area 1a actually in contact with the support surface and therefore guarantees a greater grip.

The stability is also given by the fact that the robotic foot 1, thanks to said sensors, is able to detect the profile of the contact area 1a and therefore to determine the reaction of the ground (in the direction towards and suitably in module thanks to the database robot). This aspect translates into the possibility of adapting the profile of the contact area 1a in such a way as to have a reaction with the resting surface suitable for creating a condition of equilibrium for the robot 10.

It is evident that this result was obtained with extremely reduced sensors and therefore easy to manage. Another important advantage is represented by the constructive simplicity and therefore by the reduced costs and design simplicity of the foot 1 and consequently of the robot 10.

The aforementioned advantages also result in a high ability of the foot 1 to imitate the compliance and adaptability of the human feet thus giving the robot 10 high mobility skills.

The invention is susceptible of variants falling within the scope of the inventive concept defined by the claims. In this context, all the details can be replaced by equivalent elements and the materials, shapes and dimensions can be any.

## Claims

1. Robot (10) comprising
- at least one limb (11) comprising at least one robotic foot (1) defining a contact area (1a) to a support surface of said robot (10) and an anchoring body (111) of said robotic foot (1);
- at least one motor (12) for moving of at least said limb (11);
- a control unit (13) for at least said motor (12);
that each of said robotic foot (1) comprising
- an attachment (2) of said robotic foot (1) to said anchoring body (11);
- a contact organ (3) defining said contact area (1a);
- a joint block (4) of said contact organ (3) to said attachment (2) comprising
- a first hinge (43) defining a first axis of rotation (1b) between said contact organ (3) and said attachment (2),
- a second hinge (44) defining a second axis of rotation (1c) between said contact organ (3) and said attachment (2), said first hinge (43) and said second hinge (44) being placed on opposite in correspondence of said contact area (1a) and
- a supplementary hinge (45) defining between said attachment (2) and said joint block (4) and supplementary axis of rotation (1d) transversal to said first axis of rotation (1b) and to said second axis of rotation (1c);
- at least one sensor (5,6) in data connection with said control unit (13) and measuring at least one between a first rotation around said first axis of rotation (1b) and a second rotation around said second axis of rotation (1c);
- at least one supplementary sensor (7a, 7b) for measuring the supplementary rotation around said supplementary rotation axis (1d) in data connection with said control unit (13);
and wherein that according to the measure of said supplementary rotation and one of between said first rotation and second rotation said control unit (13) is configured to command said motor (12) the movement of said limb (11) and therefore the movements of said robot (10) on said support surface;
**and characterised by** that said contact organ (3) is configured to change the profile of contact area (1a); and wherein said first hinge (43) and said second hinge (44) are independent and therefore configured to allow distinct rotations around said first axis of rotation (1b) and said second axis of rotation (1c) determining a change of the said contact area (1a).

2. Robot (10) according to claim at least one preceding claim, wherein said joint block (4) comprises a first arm (41) joined to said contact organ (3) by the use of said first hinge (43) and to said attachment (2) by the use of said supplementary hinge (45) and a second joined arm (42) joined to said contact organ (3) by the use of said second hinge (44) and to said attachment (2) by the use of said supplementary hinge (45); wherein said second joined arm (42) constrained to said contact organ (3) on the opposite side to said first arm (41) with respect to said first hinge; and wherein said robot comprises a first supplementary sensor (7a), in data connection with said control unit (13), for measuring the supplementary first rotation between said first arm (41) and said attachment (2) around said supplementary axis rotation (1d) and a second supplementary sensor (7b), in data connection with said control unit (13), for measuring of a supplementary second rotation between second arm (42) and said attachment (2) around said supplementary axis of rotation (1d); and wherein said control unit (13) is configured to command said motor (12) in accordance with the measure of said first rotation, of said supplementary first rotation and said supplementary second rotation.

3. Robot (10) according to at least one preceding claim, comprising a second sensor (6) for measuring of the second rotation around said second rotation axis (1c) in data connection with said control unit (13) is configured to drive said motor (12) in accordance with the measure of said first rotation and said second rotation.

4. Robot (10) according to at least one preceding claim, wherein said first axis of rotation (1b) is substantially transverse to said support area (1a) defining with respect to said support area (1a) a first angle of tilt range substantially between 10° and 3°.

5. Robot (10) according to a previous claim, wherein said second axis of rotation (1c) is substantially transverse to said support area (1a) defining with respect to said support area (1a) a first angle of tilt range substantially between 10° and 3°; said second axis of rotation (1c) has an inclination opposite to said first axis of rotation (1b).

6. Robot (10) according to at least one preceding claim, wherein said supplementary rotation axis (1d) is substantially parallel to said support area (1a).

7. Robot (10) according to at least one previous claim, wherein said sensors (5, 6, 7a, 7b) are inertial sensors.

8. Robot (10) according to at least one previous claim, wherein said joint block (4) comprises at least one chain (31) defining a contact area (1a).

9. Robot (10) according to at least one preceding claim, comprising a plurality of said at least one limb (11) each of which comprising at least one of said robotic foot (1) each of which defining one of said contact area (1a); and wherein said control unit (13) is configured to command the movement of at least one of said limbs (11) in accordance with said contact areas (1a).

## Patentansprüche

1. Roboter (10), umfassend:
- mindestens ein Glied (11) umfassend mindestens einen robotischen Fuß (1), der eine Kontaktfläche (1a) zu einer Stützfläche des Roboters (10) und einen Verankerungskörper (11) des robotischen Fußes (1) definiert;
- mindestens einen Motor (12) zum Bewegen mindestens des Gliedes (11);
- eine Steuereinheit (13) für mindestens den Motor (12);
wobei jeder robotische Fuß (1) umfasst:
- eine Befestigung (2) des robotischen Fußes (1) an dem Verankerungskörper (11);
- ein Kontaktglied (3), das die Kontaktfläche (1a) definiert;
- einen Gelenkblock (4) des Kontaktgliedes (3) an der Befestigung (2), umfassend:
- ein erstes Scharnier (43), das eine erste Drehachse (1b) zwischen dem Kontaktglied (3) und der Befestigung (2) definiert,
- ein zweites Scharnier (44), das eine zweite Drehachse (1c) zwischen dem Kontaktglied (3) und der Befestigung (2) definiert, wobei das erste Scharnier (43) und das zweite Scharnier (44) gegenüberliegend in Bezug auf die Kontaktfläche (1a) angeordnet sind und
- ein zusätzliches Scharnier (45), das zwischen der Befestigung (2) und dem Gelenkglied (4) eine zusätzliche Drehachse (1d) definiert, die sich quer zu der ersten Drehachse (1b) und der zweiten Drehachse (1c) erstreckt;
- mindestens einen Sensor (5,6), der in Datenverbindung mit der Steuereinheit (13) steht und der mindestens eine der ersten Drehung um die erste Drehachse (1b) und der zweiten Drehung um die zweite Drehachse (1c) misst;
- mindestens einen zusätzlichen Sensor (7a, 7b) zur Messung der zusätzlichen Drehung um die zusätzliche Drehachse (1d), wobei der Sensor in Datenverbindung mit der Steuereinheit (13) steht;
und wobei nach der Messung der zusätzlichen Drehung und einer der ersten Drehung und der zweiten Drehung ist die Steuereinheit (13) konfiguriert, den Motor (12) zur Bewegung des Glieds (11) und damit zur Bewegung des Roboters (10) auf die Stützfläche anzusteuern;
**und dadurch gekennzeichnet, dass** das Kontaktglied (3) konfiguriert ist, das Profil der Kontaktfläche (1a) zu ändern; und wobei das erste Scharnier (43) und das zweite Scharnier (44) unabhängig sind und somit konfiguriert sind, getrennte Drehungen um die erste Drehachse (1b) und die zweite Drehachse (1c) zu ermöglichen, was eine Änderung der Kontaktfläche (1a) bewirkt.

2. Roboter (10) nach mindestens einem vorhergehenden Anspruch, wobei der Gelenkblock (4) einen ersten Arm (41) umfasst, der mit dem Kontaktglied (3) durch die Verwendung des ersten Scharniers (43) und mit der Befestigung (2) durch die Verwendung des zusätzlichen Scharniers (45) verbunden ist, und einen zweiten verbundenen Arm (42), der mit dem Kontaktglied (3) durch die Verwendung des zweiten Scharniers (44) und mit der Befestigung (2) durch die Verwendung des zusätzlichen Scharniers (45) verbunden ist; wobei der zweite verbundene Arm (42) an dem dem ersten Arm (41) gegenüberliegenden Seite des Kontaktgliedes (3) in Bezug auf das erste Scharnier gedrückt wird; und wobei der Roboter einen ersten zusätzlichen Sensor (7a) umfasst, der in Datenverbindung mit der Steuereinheit (13) steht, zur Messung der ersten zusätzlichen Drehung zwischen dem ersten Arm (41) und der Befestigung (2) um die zusätzliche Drehachse (1d), und einen zweiten zusätzlichen Sensor (7b), der in Datenverbindung mit der Steuereinheit (13) steht, zur Messung einer zweiten zusätzlichen Drehung zwischen dem zweiten Arm (42) und der Befestigung (2) um die zusätzliche Drehachse (1d); und wobei die Steuereinheit (13) konfiguriert ist, den Motor (12) nach der Messung der ersten Drehung, der ersten zusätzlichen Drehung und der zweiten zusätzlichen Drehung anzusteuern.

3. Roboter (10) nach mindestens einem vorhergehenden Anspruch, umfassend einen zweiten Sensor (6) zur Messung der zweiten Drehung um die zweite Drehachse (1c), der in Datenverbindung mit der Steuereinheit (13) steht und konfiguriert ist, den Motor (12) nach der Messung der ersten Drehung und der zweiten Drehung zu betätigen.

4. Roboter (10) nach mindestens einem vorhergehenden Anspruch, wobei die erste Drehachse (1b) sich im Wesentlichen quer zu der Stützfläche (1a) erstreckt und in Bezug auf die Stützfläche (1a) einen ersten Neigungswinkel im Bereich von 10° bis 3° definiert.

5. Roboter (10) nach einem vorhergehenden Anspruch, wobei die zweite Drehachse (1c) sich im Wesentlichen quer zu der Stützfläche (1a) erstreckt und in Bezug auf die Stützfläche (1a) einen ersten Neigungswinkel im Bereich von 10° bis 3° definiert; wobei die zweite Drehachse (1c) eine zu der ersten Drehachse (1b) entgegensetzte Neigung aufweist.

6. Roboter (10) nach mindestens einem vorhergehenden Anspruch, wobei die zusätzliche Drehachse (1d) sich im Wesentlichen parallel zu der Stützfläche (1a) erstreckt.

7. Roboter (10) nach mindestens einem vorhergehenden Anspruch, wobei die Sensoren (5, 6, 7a, 7b) Trägheitssensoren sind.

8. Roboter (10) nach mindestens einem vorhergehenden Anspruch, wobei der Gelenkblock (4) mindestens eine Kette (31) umfasst, die eine Kontaktfläche (1a) definiert.

9. Roboter (10) nach mindestens einem vorhergehenden Anspruch, umfassend eine Mehrzahl des mindestens ein Glied (11), jedes mindestens ein der robotischen Füße (1) umfasst, der jeweils eine der Kontaktflächen (1a) definiert; und wobei die Steuereinheit (13) konfiguriert ist, die Bewegung eines der Glieder (11) nach den Kontaktflächen (1a) anzusteuern.

## Revendications

1. Robot (10) comprenant :
- au moins un membre (11) comprenant au moins un pied robotique (1) définissant une zone de contact (1a) avec une surface de support dudit robot (10) et un corps d'ancrage (11) dudit pied robotique (1);
- au moins un moteur (12) pour déplacer au moins ledit membre (11);
- une unité de commande (13) pour au moins ledit moteur (12);
chacun dudit pied robotique (1) comprenant
- une fixation (2) dudit pied robotique (1) audit corps d'ancrage (11);
- un organe de contact (3) définissant ladite zone de contact (1a);
- un bloc d'articulation (4) dudit organe de contact (3) à ladite fixation (2) comprenant
- une première charnière (43) définissant un premier axe de rotation (1b) entre ledit organe de contact (3) et ladite fixation (2),
- une deuxième charnière (44) définissant un deuxième axe de rotation (1c) entre ledit organe de contact (3) et ladite fixation (2), ladite première charnière (43) et ladite deuxième charnière (44) étant placées en correspondance opposée de ladite zone de contact (1a) et
- une charnière supplémentaire (45) définissant entre ladite fixation (2) et ledit bloc d'articulation (4) un axe de rotation supplémentaire (1d) transversal audit premier axe de rotation (1b) et audit deuxième axe de rotation (1c);
- au moins un capteur (5, 6) en connexion de données avec ladite unité de commande (13) et mesurant au moins l'une entre une première rotation autour dudit premier axe de rotation (1b) et une deuxième rotation autour dudit deuxième axe de rotation (1c);
- au moins un capteur supplémentaire (7a, 7b) pour mesurer la rotation supplémentaire autour dudit axe de rotation supplémentaire (1d) en connexion de données avec ladite unité de commande (13);
et où, selon la mesure de ladite rotation supplémentaire et l'une entre ladite première rotation et ladite deuxième rotation, ladite unité de commande (13) est configurée pour commander ledit moteur (12) pour le déplacement dudit membre (11) et donc les mouvements dudit robot (10) sur ladite surface de support;
et **caractérisé par le fait que** ledit organe de contact (3) est configuré pour changer le profil de la zone de contact (1a); et où ladite première charnière (43) et ladite deuxième charnière (44) sont indépendantes et donc configurées pour permettre des rotations distinctes autour dudit premier axe de rotation (1b) et dudit deuxième axe de rotation (1c) déterminant un changement de ladite zone de contact (1a).

2. Robot (10) selon au moins une revendication précédente, où ledit bloc d'articulation (4) comprend un premier bras (41) relié audit organe de contact (3) par l'utilisation de ladite première charnière (43) et à ladite fixation (2) par l'utilisation de ladite charnière supplémentaire (45) et un deuxième bras relié (42) relié audit organe de contact (3) par l'utilisation de ladite deuxième charnière (44) et à ladite fixation (2) par l'utilisation de ladite charnière supplémentaire (45); où ledit deuxième bras relié (42) est contraint audit organe de contact (3) du côté opposé audit premier bras (41) par rapport à ladite première charnière; et où ledit robot comprend un premier capteur supplémentaire (7a), en connexion de données avec ladite unité de commande (13), pour mesurer la première rotation supplémentaire entre ledit premier bras (41) et ladite fixation (2) autour dudit axe de rotation supplémentaire (1d) et un deuxième capteur supplémentaire (7b), en connexion de données avec ladite unité de commande (13), pour mesurer une deuxième rotation supplémentaire entre ledit deuxième bras (42) et ladite fixation (2) autour dudit axe de rotation supplémentaire (1d); et où ladite unité de commande (13) est configurée pour commander ledit moteur (12) en fonction de la mesure de ladite première rotation, de ladite première rotation supplémentaire et de ladite deuxième rotation supplémentaire.

3. Robot (10) selon au moins une revendication précédente, comprenant un deuxième capteur (6) pour mesurer la deuxième rotation autour dudit deuxième axe de rotation (1c) en connexion de données avec ladite unité de commande (13) configurée pour commander ledit moteur (12) en fonction de la mesure de ladite première rotation et de ladite deuxième rotation.

4. Robot (10) selon au moins une revendication précédente, où ledit premier axe de rotation (1b) est sensiblement transversal à ladite zone de support (1a) définissant par rapport à ladite zone de support (1a) un premier angle d'inclinaison compris entre 10° et 3°.

5. Robot (10) selon une revendication précédente, où ledit deuxième axe de rotation (1c) est sensiblement transversal à ladite zone de support (1a) définissant par rapport à ladite zone de support (1a) un premier angle d'inclinaison compris entre 10° et 3° ledit deuxième axe de rotation (1c) a une inclinaison opposée audit premier axe de rotation (1b).

6. Robot (10) selon au moins une revendication précédente, où ledit axe de rotation supplémentaire (1d) est sensiblement parallèle à ladite zone de support (1a).

7. Robot (10) selon au moins une revendication précédente, où lesdits capteurs (5, 6, 7a, 7b) sont des capteurs inertiels.

8. Robot (10) selon au moins une revendication précédente, où ledit bloc d'articulation (4) comprend au moins une chaîne (31) définissant une zone de contact (1a).

9. Robot (10) selon au moins une revendication précédente, comprenant une pluralité desdits au moins un membre (11) chacun comprenant au moins l'un desdits pieds robotiques (1) chacun définissant l'une desdites zones de contact (1a); et où ladite unité de commande (13) est configurée pour commander le déplacement d'au moins l'un desdits membres (11) en fonction desdites zones de contact (1a).
